# DEMANDE DE BREVET EUROPEEN

(11) **EP 3 255 262 A1**
(43) Date de publication de la demande: **13.12.2017**
(21) Numéro de dépôt: 17173292.8
(22) Date de dépôt: 29.05.2017
(51) Int. Cl.: F02B 67/00, F01P 5/10, F04D 29/60, B60K 17/24, F16H 57/021

(54) **PALIER DE TRANSMISSION SERVANT DE SUPPORT POUR UNE POMPE A EAU SUR UN GROUPE MOTOPROPULSEUR**

(30) Priorité: 09.06.2016 FR 1655310
(71) Demandeur: PSA Automobiles SA, 78300 Poissy (FR)
(72) Inventeur: MOIGNARD, JEREMY, 92390 VILLENEUVE LA GARENNE (FR); REAUBOURG, CYRIL, 95390 ST PRIX (FR); BARBOSA PEREIRA, VICTOR, 95160 MONTMORENCY (FR)

(57) **Abrégé**

L'invention porte sur un palier (1) de transmission, notamment destiné à être solidarisé sur une face d'un groupe motopropulseur (8), le palier (1) de transmission comportant un socle (9) et un bras (10) s'étendant sensiblement perpendiculairement au socle (9), le bras (10) présentant à une extrémité distale du socle (9) un passage (2), caractérisé en ce que le palier (1) de transmission comprend un élément de liaison (6) raccordé au socle (9) et présentant une extrémité distale au socle (9) portant un alésage (4) destiné à la réception d'un corps d'un organe, notamment d'une pompe à eau (3).

## Description

L'invention porte sur un palier de transmission, servant notamment de support pour un organe tel qu'une pompe à eau sur un groupe motopropulseur équipé d'un moteur à combustion interne. Ceci permet d'utiliser un élément déjà présent sur une face du groupe motopropulseur pour la fixation de l'organe tel que la pompe à eau. Dans la suite du présent texte, on décrira l'exemple d'un organe sous forme d'une pompe à eau sans s'y limiter cependant.

On rappelle que des paliers sont des organes utilisés en construction mécanique pour supporter et guider, en rotation, des arbres de transmission. Dans un exemple préféré mais non limité de la présente invention, l'arbre en question est l'arbre d'entraînement des roues d'un véhicule, tel qu'un véhicule automobile.

La présente invention concerne aussi un ensemble palier de transmission et organe, notamment une pompe à eau, fixé sur ce palier ainsi qu'un groupe motopropulseur équipé d'un tel ensemble. La pompe à eau, quand il s'agit de cet organe, sert à la circulation d'un fluide de refroidissement à base d'eau pour le refroidissement d'un moteur à combustion interne du véhicule automobile.

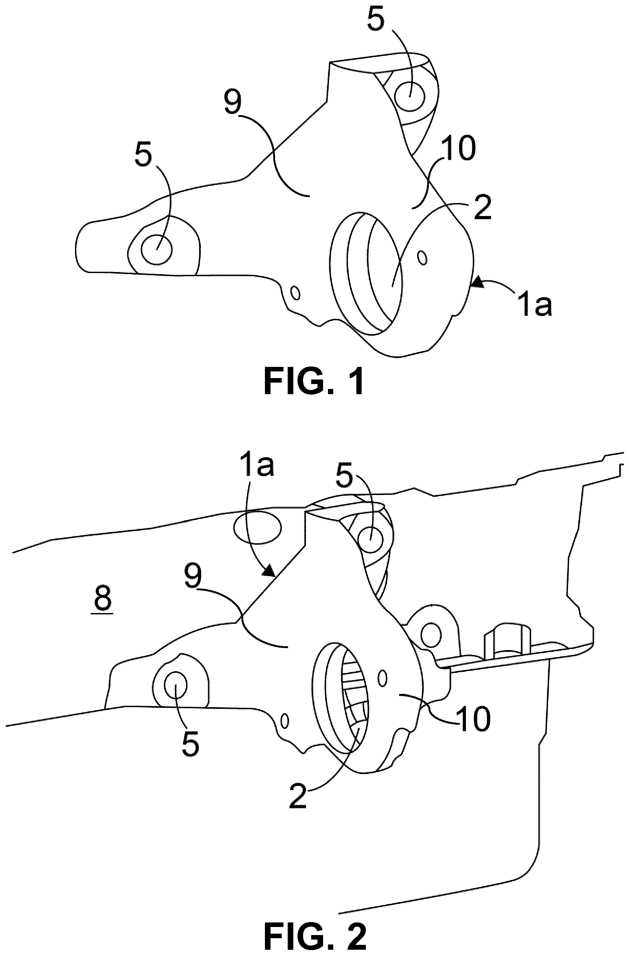

Pour fixer une pompe à eau, il est aujourd'hui d'usage d'utiliser un support en tôle. Ceci est montré aux figures 1 et 2. En se référant à ces figures, un palier 1a de transmission conforme à l'état de la technique et équipant déjà une face du groupe motopropulseur 8 comporte un socle 9 et un bras 10 s'étendant sensiblement perpendiculairement au socle 9. Le bras 10 présente à une extrémité distale du socle 9 un passage 2.

Ce palier 1a de transmission peut servir de palier intermédiaire dit palier relais pour réaliser un support intermédiaire d'un axe de transmission d'un élément auxiliaire au groupe motopropulseur.

Il existe présentement une grande difficulté à trouver de la place sur une face d'un groupe motopropulseur pour des interfaces de fixation d'éléments à fixer sur le groupe. Ceci est particulièrement critique pour une pompe à eau avec de possibles problèmes de tenue mécanique et vibratoire.

Le document FR-A-2 983 240 décrit un support d'accessoire adapté à servir d'appui à un accessoire sur un bloc-moteur. Un support d'accessoire, à savoir le support du compresseur forme un collecteur d'entrée d'eau pour une pompe à eau solidaire du bloc-moteur. De ce fait, il n'est plus nécessaire de réaliser une pièce indépendante formant un collecteur d'entrée d'eau.

L'intégration du collecteur d'entrée d'eau dans le support permet de réduire les coûts de fabrication, étant donné que le surcoût de l'intégration d'un collecteur d'entrée d'eau dans un support est inférieur au coût de fabrication de la pièce indépendante. Ceci permet aussi la suppression d'une pièce à monter et diminue les opérations de montage.

Cependant, ce document ne donne aucune indication quant au maintien d'une pompe à eau par un support d'un autre élément auxiliaire déjà présent sur une face du groupe motopropulseur.

Par conséquent, le problème à la base de l'invention est d'intégrer le support d'une pompe à eau sur une face d'un groupe motopropulseur équipé d'un moteur à combustion interne de véhicule automobile sur un support déjà présent sur cette face.

Pour atteindre cet objectif, il est prévu selon l'invention un palier de transmission destiné à être solidarisé sur une face d'un groupe motopropulseur, le palier de transmission comportant un socle et un bras s'étendant sensiblement perpendiculairement au socle, le bras présentant à une extrémité distale du socle un passage, tel que le palier de transmission comprend un élément de liaison raccordé au socle et présentant une extrémité distale au socle portant un alésage destiné à la réception d'un corps d'un organe, par exemple d'un corps d'une pompe à eau.

L'organe en question peut donc être une pompe à eau, ou encore toute portion de circuit de fluide de refroidissement de moteur thermique ou de machine électrique.

Le contour de l'alésage, donc une portion de l'élément de liaison, forme les moyens de maintien de l'organe, tel que la pompe à eau, à l'intérieur de l'alésage.

On comprend par « passage dans le palier de transmission comme un passage pour l'arbre que le palier est destiné à supporter.

La présente invention consiste à utiliser une pièce déjà présente sur le groupe motopropulseur, à savoir le palier de transmission, en le modifiant, afin que cette pièce devienne support pour une pompe à eau sur un groupe motopropulseur. Ceci permet de fixer un organe tel qu'une pompe à eau sur un groupe motopropulseur dans un environnement de plus en plus contraint en assurant une bonne tenue mécanique et vibratoire pour la pompe à eau. On vient ainsi détourner la fonction première du palier de transmission, à savoir la réception d'un arbre, pour s'en servir aussi d'un support d'un ou plusieurs autres organes : on vient ainsi simplifier et compacter le montage de cet ou ces organes.

Le palier de transmission est une pièce déjà présente sur le groupe motopropulseur et possède des interfaces de fixation propres sur le groupe motopropulseur. En le modifiant, l'invention permet d'utiliser ces interfaces de fixation pour la solidarisation de la pompe à eau sur le groupe motopropulseur, donc de dégager de la place sur la face de support du groupe motopropulseur, la pompe à eau n'ayant pas besoin d'avoir des fixations propres autres que celles du palier de transmission. L'invention porte d'abord sur sur le palier de transmission, quel que soit l'arbre auquel il est associé, ainsi que sur l'ensemble du palier et de son arbre, par exemple un arbre d'entraînement des roues d'un véhicule.

Avantageusement, l'alésage est cylindrique ou conique en présentant un premier axe et en traversant l'élément de liaison de part en part, le passage étant circulaire et centré sur un deuxième axe traversant le bras de part en part, les premier et deuxième axes s'étendant parallèlement.

Avantageusement, l'élément de liaison est sous la forme d'une équerre présentant une première branche raccordée au socle et une deuxième branche perpendiculaire à la première branche et supportant l'alésage à son extrémité distale, les première et deuxième branches étant sensiblement planes. L'équerre permet de rehausser la pompe à eau destinée à être supportée par rapport au reste du palier de transmission et donc à éviter des interférences possibles entre la pompe à eau et l'élément pénétrant dans le passage du palier de transmission.

Le socle, comme détaillé par la suite, est en appui contre le groupe motopropulseur. Le bras, comme également détaillé par la suite, porte le passage en étant décalé de la paroi du groupe motopropulseur.

Avantageusement, la deuxième branche porte une portion externe de l'alésage, un plan radial de l'alésage étant perpendiculaire à un plan contenant la deuxième branche.

Avantageusement, le socle, le bras, l'élément de liaison sont d'un même tenant. Le palier de transmission étant dans l'exemple montré ci-après une pièce de fonderie, il est possible d'assurer une tenue mécanique et vibratoire supérieure à ce qui pourrait être obtenu avec un support tôle comme c'est le cas pour un support de pompe à eau conforme à l'état de la technique. Une pièce d'un seul tenant donc plus rigide permet d'assurer une telle tenue.

L'invention concerne aussi un ensemble d'un palier de transmission et d'une pompe à eau présentant un corps délimitant un contour externe de la pompe à eau, le palier de transmission supportant la pompe à eau, caractérisé en ce que le palier de transmission est tel que précédemment décrit, une portion du corps de la pompe à eau pénétrant dans l'alésage de l'élément de liaison.

Avantageusement, le corps de la pompe à eau fait saillie des deux côtés de l'oeilleton. La pompe est donc mieux supportée en n'étant pas en appui en porte à faux sur le palier de transmission.

Avantageusement, une pièce intercalaire réalise une interface entre l'alésage et le corps de la pompe à eau, la pièce intercalaire étant en un matériau permettant d'absorber au moins en partie des vibrations.

Avantageusement, l'alésage est de dimension juste suffisante pour recevoir une portion du corps de la pompe à eau en son intérieur. La pompe est ainsi bien maintenue dans l'alésage.

L'invention concerne un groupe motopropulseur de véhicule automobile, caractérisé en ce qu'il porte, sur une de ses faces, un tel ensemble d'un palier de transmission et d'une pompe à eau. La face de support présente donc de la place libérée par la suppression des moyens de fixation spécifiques à la pompe à eau qui sont remplacés par les moyens de fixation du palier de transmission du fait de la mutualisation du palier de transmission avec le support de la pompe à eau.

Avantageusement, le groupe motopropulseur comprend une forme faisant saillie de sa face portant l'ensemble, la forme faisant saillie se logeant sous l'élément de liaison du palier de transmission, l'élément de liaison reposant sur la forme en saillie. Ce support additionnel contribue à la rigidité du support de la pompe à eau.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une vue en perspective d'un palier de transmission selon l'état de la technique,
- la figure 2 est une représentation schématique d'une vue en perspective d'un palier de transmission solidarisé à une face d'un groupe motopropulseur selon l'état de la technique,
- la figure 3 est une représentation schématique d'une vue en perspective d'un palier de transmission solidarisé à une face d'un groupe motopropulseur, ce palier de transmission étant selon un mode de réalisation de la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

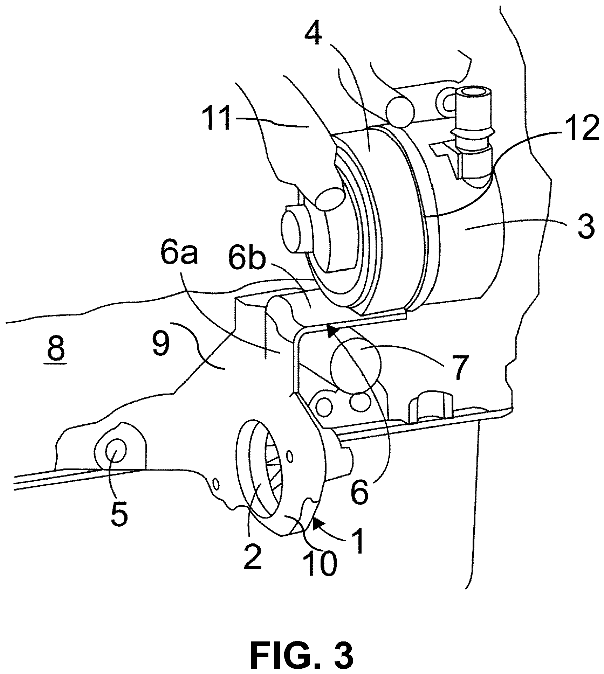

En se référant à la figure 3, l'invention concerne un palier 1 de transmission destiné à être solidarisé sur une face d'un groupe motopropulseur 8. Le palier 1 de transmission, similairement à un palier 1a de transmission de l'état de la technique ayant été montré aux figures 1 et 2, comporte un socle 9 et un bras 10 s'étendant sensiblement perpendiculairement au socle 9. Le bras 10 présente à une extrémité distale du socle 9 un passage 2 destiné à recevoir un élément.

Selon la présente invention, le palier 1 de transmission comprend un élément de liaison 6 raccordé au socle 9. Cet élément de liaison 6 présente une extrémité distale au socle 9 portant un alésage 4 destiné à la réception d'un corps d'une pompe à eau 3 en son intérieur.

Ainsi, selon l'invention, il est utilisé un palier 1 de transmission déjà présent sur un groupe motopropulseur 8. Ce palier 1 de transmission déjà présent est sensiblement modifié pour permettre aussi de supporter une pompe à eau 3 en recevant une portion de son corps dans un alésage 4 qu'il porte. Le palier 1 de transmission remplit alors deux fonctions indépendantes l'une de l'autre.

L'alésage 4 peut être cylindrique ou conique en présentant un premier axe et en traversant l'élément de liaison 6 de part en part, le passage 2 étant circulaire et centré sur un deuxième axe traversant le bras 10 de part en part, les premier et deuxième axes s'étendant parallèlement.

En position montée du palier 1 de transmission sur le groupe motopropulseur 8, l'alésage 4 peut se trouver au-dessus du passage 2 en étant ou non superposé avec ce passage 2. Le contraire est aussi possible.

L'élément de liaison 6 peut être sous la forme d'une équerre. Cette équerre présente une première branche 6a raccordée au socle 9 et une deuxième branche 6b perpendiculaire à la première branche 6a et supportant l'alésage 4 à son extrémité distale. Les première et deuxième branches 6a, 6b sont sensiblement planes.

Les première et deuxième branches 6a, 6b sont suffisamment épaisses et larges pour pouvoir supporter le poids de la pompe à eau 3 portée à l'intérieur de l'alésage 4. La longueur des branches 6a, 6b est calculée selon les dimensions de la pompe à eau 3 afin que la pompe à eau 3 n'interfère pas avec un organe passant par le passage 2 du bras 10 du palier 1 de transmission. La forme en équerre de l'élément de liaison 6 permet de surélever la pompe à eau 3 par rapport à cet organe.

La deuxième branche 6b peut porter une portion externe de l'alésage 4, un plan radial de l'alésage 4 étant perpendiculaire à un plan contenant la deuxième branche 6b. Tout l'alésage 4 peut se trouver ainsi au-dessus de l'extrémité distale de la deuxième branche 6b. Si l'alésage 4 est de forme cylindrique, la portion externe de l'alésage 4 reposant sur la deuxième branche 6b peut être aplatie afin d'optimiser les surfaces de contact entre la portion externe et la portion de la deuxième branche 6b en vis-à-vis.

Dans le palier 1 de transmission, le socle 9, le bras 10, l'élément de liaison 6 peuvent être d'un même tenant. Ces pièces peuvent être venues de matière, le palier 1 de transmission étant produit en fonderie.

En alternative, ces pièces peuvent être soudées ou collées les unes aux autres. Ceci peut être le cas.

L'invention concerne aussi un ensemble d'un palier 1 de transmission et d'une pompe à eau 3 présentant un corps délimitant un contour externe de la pompe à eau 3, le palier 1 de transmission supportant la pompe à eau 3. Selon l'invention, le palier 1 de transmission est tel que précédemment décrit, une portion du corps de la pompe à eau 3 pénétrant dans l'alésage 4 de l'élément de liaison 6.

Le corps de la pompe à eau 3 peut faire saillie des deux côtés de l'alésage 4, c'est-à-dire que la pompe à eau 3 peut ressortir des deux côtés de l'alésage 4, ce qui est préféré pour un meilleur support de la pompe à eau 3.

L'alésage 4 peut présenter une dimension juste suffisante pour recevoir une portion du corps de la pompe à eau 3 en son intérieur. Il n'y a alors que très peu de jeu entre l'intérieur de l'alésage 4 et le contour externe de la portion de la pompe à eau 3 présente dans l'alésage 4. La pompe à eau 3 peut présenter différents contours externes de son corps et l'évidement central de l'alésage 4 est réalisé en adéquation avec un contour spécifique.

Par exemple, l'alésage 4 peut être cylindrique quand le corps de la pompe à eau 3 est cylindrique. Dans une autre forme de réalisation, l'alésage 4 peut être conique quand le corps de la pompe à eau 3 est conique. Ceci permet un maintien adéquat de la pompe à eau 3 dans l'alésage 4.

L'invention concerne aussi un groupe motopropulseur 8 de véhicule automobile. Le groupe motopropulseur 8 porte sur une de ses faces un ensemble d'un palier 1 de transmission et d'une pompe à eau 3 tel que précédemment décrit.

Un groupe motopropulseur comprend un carter moteur avec, sur ses faces, différents accessoires qui sont supportés par le carter. Sans que cela soit limitatif, les accessoires supportés peuvent être notamment un compresseur pour la climatisation, un turbocompresseur, un alternateur, une pompe d'injection ou une pompe d'assistance de direction.

Pour un groupe motopropulseur selon la présente invention, un des accessoires présents est une pompe à eau 3 qui est destinée à assurer la circulation du liquide de refroidissement utilisé pour refroidir le moteur, cette pompe à eau 3 étant solidarisée au carter du groupe motopropulseur en étant supportée par le palier 1 de transmission.

Comme le poids d'une pompe à eau 3 peut être conséquent et tordre l'élément de liaison 6 quand la pompe à eau 3 est logé en porte à faux dans l'alésage 4, le groupe motopropulseur 8 peut comprendre une forme faisant saillie 7 de sa face portant l'ensemble. Cette forme faisant saillie 7 se loge alors sous l'élément de liaison 6 du palier 1 de transmission, l'élément de liaison 6 reposant sur la forme en saillie.

Cette forme en saillie est représentée schématiquement à la figure 3 sous la forme d'un cylindre mais peut présenter une autre forme en pratique, par exemple une forme plane sans que cela soit limitatif.

A la figure 3, un conduit 11 est montré sortant du groupe motopropulseur 8. Ce conduit 11 n'est pas une caractéristique de la présente invention et ne coopère pas avec le palier 1 de transmission selon la présente invention mais montre qu'une face de carter moteur est sensiblement encombrée, des organes pouvant chevaucher d'autres organes.

Le palier 1 de transmission selon la présente invention, en analogie avec un palier 1 de transmission de l'état de la technique peut présenter une ou plusieurs interfaces de fixation sur le groupe motopropulseur 8, avantageusement trois interfaces de fixation.

Une seule interface est visible à la figure 3 pour un palier 1 de transmission selon la présente invention et respectivement un et deux interfaces sont visibles aux figures 1 et 2 pour un palier 1 de transmission selon l'état de la technique. Ces interfaces de fixation permettent le passage 2 d'élément de fixation amovible pour le démontage du palier 1 de transmission du groupe motopropulseur 8.

A la figure 3, il est visible une pièce intercalaire 12 venant faire l'interface entre l'alésage 4 et le corps de la pompe 3. Cette pièce intercalaire est de préférence en matériau de type caoutchouc ou autre matériau de type polymère ou non présentant une certaine compressibilité. Cette pièce intercalaire 12 est purement optionnelle mais permet de fixer la pompe et d'absorber au moins une partie des vibrations en fonctionnement du véhicule.

L'invention n'est nullement limitée aux modes de réalisation décrits et illustrés qui n'ont été donnés qu'à titre d'exemples.

## Revendications

1. Palier (1) de transmission, notamment destiné à être solidarisé sur une face d'un groupe motopropulseur (8), le palier (1) de transmission comportant un socle (9) et un bras (10) s'étendant sensiblement perpendiculairement au socle (9), le bras (10) présentant à une extrémité distale du socle (9) un passage (2), **caractérisé en ce que** le palier (1) de transmission comprend un élément de liaison (6) raccordé au socle (9) et présentant une extrémité distale au socle (9) portant un alésage (4) destiné à la réception d'un corps d'un organe, notamment d'une pompe à eau (3).

2. Palier (1) de transmission selon la revendication 1, dans lequel l'alésage (4) est cylindrique ou conique en présentant un premier axe et en traversant l'élément de liaison (6) de part en part, le passage (2) étant circulaire et centré sur un deuxième axe traversant le bras (10) de part en part, les premier et deuxième axes s'étendant parallèlement.

3. Palier (1) de transmission selon la revendication 1 ou 2, dans lequel l'élément de liaison (6) est sous la forme d'une équerre présentant une première branche (6a) raccordée au socle (9) et une deuxième branche (6b) perpendiculaire à la première branche (6a) et supportant l'alésage (4) à son extrémité distale, les première et deuxième branches (6a, 6b) étant sensiblement planes.

4. Palier (1) de transmission selon la revendication 3, dans lequel la deuxième branche (6b) porte une portion externe de l'alésage (4), un plan radial de l'alésage (4) étant perpendiculaire à un plan contenant la deuxième branche (6b).

5. Palier (1) de transmission selon l'une quelconque des revendications précédentes, dans lequel le socle (9), le bras (10), l'élément de liaison (6) sont d'un même tenant.

6. Ensemble d'un palier (1) de transmission et d'un organe, notamment d'une pompe à eau (3), présentant un corps délimitant un contour externe de l'organe (3), le palier (1) de transmission supportant l'organe (3), **caractérisé en ce que** le palier (1) de transmission est selon l'une quelconque des revendications précédentes, une portion du corps de l'organe (3) pénétrant dans l'alésage (4) de l'élément de liaison (6).

7. Ensemble selon la revendication 6, dans lequel le corps de l'organe (3) fait saillie des deux côtés de l'alésage (4).

8. Ensemble (1, 4) selon l'une quelconque des revendications 6 ou 7, dans lequel l'alésage (4) est de dimension juste suffisante pour recevoir une portion du corps de l'organe (3) en son intérieur.

9. Ensemble selon l'une des revendications 6 ou 7, **caractérisé en ce qu'**il comprend également un arbre de transmission reçu dans le palier de transmission, notamment un arbre d'entraînement de roues.

10. Groupe motopropulseur (8), **caractérisé en ce qu'**il porte, sur une de ses faces, un ensemble d'un palier (1) de transmission et d'un organe (3) selon l'une quelconque des revendications 6 à 9.

11. Groupe motopropulseur (8) selon la revendication précédente, lequel comprend une forme faisant saillie (7) de sa face portant l'ensemble (1, 4), la forme faisant saillie (7) se logeant sous l'élément de liaison (6) du palier (1) de transmission, l'élément de liaison (6) reposant sur la forme en saillie (7).

12. Véhicule automobile, **caractérisé en ce qu'**il comprend le groupe motopropulseur de l'une des revendications 10 ou 11.
